# EUROPEAN PATENT SPECIFICATION

(11) **EP 1 821 196 B1**
(45) Date of publication and mention of the grant of the patent: **13.08.2008**
(21) Application number: 06003029.3
(22) Date of filing: 15.02.2006
(51) Int. Cl.: G06F 7/58

(54) **Method and apparatus for seeding a cryptographic random number generator**
Verfahren und Vorrichtung zum Erzeugen von Initialwerten für einen Zufallszahlengenerator
Procédé et dispositif de production de valeurs initiales pour un générateur cryptographique de nombres aléatoires

(43) Date of publication of application: 22.08.2007
(73) Proprietor: Jaycrypto Limited, Hornchurch RM11 2QB (GB)
(72) Inventor: Busari, Jay, Silom Road, Bang Rak, Bangkok 10500 (TH)
(74) Representative: Peterreins, Frank

(56) References cited:
- EP-A- 1 202 165
- WO-A-01/95091
- US-A- 5 732 138
- US-A1- 2003 078 951
- SCHNEIER B: "CRYPTOGRAPHIC DESIGN VULNERABILITIES" COMPUTER, IEEE SERVICE CENTER, LOS ALAMITOS, CA, US, vol. 31, no. 9, September 1998 (1998-09), pages 29-33, XP000824509 ISSN: 0018-9162

## Description

### Field of the invention

The invention relates generally to the field of cryptography and, more particularly, to a method and an apparatus for seeding cryptographic random number generators.

### Background Art

Random number generators (RNG) may be used for a variety of electronic applications, such as lotteries, gambling machines, scientific and financial modeling simulation, program and algorithm testing, equation solving, and computer security. Cryptographic random number generators would be more suitable for computer security applications such as cryptography, digital signatures (including non-repudiation), private communication protocols and message integrity. Cryptographic random number generators are a fundamental building block for strengthening and securing the confidentiality, integrity and authentication of electronic communications. Cryptographic random number generators may also be used to generate symmetric or asymmetric cryptographic keys.

Typically, cryptographic random number generators are seeded by a clocking device, or other entropy sources from built-in hardware like disk drives, mouse movements, keyboard input timing, running processes, line noise on microphones, which may even all be used in different permutations of combinations (reference is made to the IETF's RFC1750). These seed sources may have reduced effectiveness due to specific mechanisms, such as interrupt and event handling, and limitations due to the period (i.e. the number of values output before it repeats) inherent to those systems. Since the main components of a computer system are specifically intended to be deterministic, it is not possible to use them to generate truly random numbers.

Random numbers generated typically have a specific probability, density and distribution given a range of values. An ideal random number generator suitable for cryptographic applications would provide values that are uniformly distributed and non-deterministic over an infinite range.

As another method for generating pseudo random numbers in a video device, there has been a known method comprising video source and sink devices to generate pseudo random numbers from the output stream of cipher bits for use in a symmetric encryption and decryption process for authenticating video receiving devices. One example of such a random-number generating apparatus based on this method is described in US patent application publication no. 2004156500.

Another method and apparatus incorporates analog random number generators based on thermal noises generated in a thermal-noise generating element, or even light-emitting element to generate noise based on light as described in EP 1 544 726 A1. A related method an apparatus is described in GB 2 390 271. The most common approach is to utilize a noise source as the origin of randomness, an amplifier to amplify the waveform based on the noise, a clocking signal to indicate intervals at which to sample the amplified noise waveform with an analog-to-digital converter. While this method can generate a truly random sequence of numbers, the concern is more of situations where a failure occurs in the noise generating element of the analog random number generator. Such a failure may only be partial and just limiting the range of the noise waveform. This type of failure may not be immediately apparent since the apparatus will continue to output "random" numbers. However, for a cryptographic system, such a situation could be considered a potentially severe compromise.

US 5,732,138 pertains to a method for generating a pseudo-random number that can be used in the formulation of a cryptographic key to ensure the security of confidential information. Initially, the state of a chaotic system is digitized to form a binary string. This can be done, for example, by taking pictures of a moving freeway, clouds, or lava lamps. The binary string is then cryptographically hashed to produce a second binary string. The cryptographic hashing function serves several purposes. The cryptographic hash make it difficult to predict the chaotic system. Furthermore, small variations in the digitized chaotic system will produce extremely different binary strings. In addition, knowledge about the cryptographic hash yields no information regarding the chaotic system. It is this second binary string which is used as a seed for a pseudo-random number generator.

EP 1 202 165 discloses a method and an apparatus which obtain random numbers, and/or obtain seed values from which random numbers can be generated, from built-in self-test registers. More specifically, the methods and apparatus disclosed in EP 1 202 165 utilize data maintained by one or more multiple input shift registers as a basis for generating cryptographically strong random numbers.

WO 01/95091 discloses a method and a corresponding device for generating true random numbers for use in encryption of a message for secure transmission of said message from a sending device to a receiver, or for authentication of a sent message. An optical image represented by optical data is obtained by an optical sensor and processed in order to improve the stochasticity of the optical data. The thus processed data is then used for generating random numbers which can be used as an encryption key, or for generating an encryption key, for subsequent use in an encryption algorithm for encrypting the message.

US 2003/0078951 discloses a system and a method to generate cellular automata based random number generators (CA-based RNGs). A CA-based RNG is where an output of each cell of the CA at time t is dependent on inputs from any cells of the CA (including perhaps itself) at time t-1. The connections (or inputs) are selected to produce high entropy such that the RNG passes a standard suite of random number of tests, such as the DIEHARD suite. The RNGs may be implemented with field programmable gate arrays.

The article "Cryptographic Design Vulnerabilities" by Bruce Schneier, IEEE Service Center, Los Alamitos, CA, US, vol. 31, no. 9, September 1998, pages 29-33, ISSN: 0018-9162, also deals with cryptography. Furthermore, the book "Applied Cryptography: Protocols, Algorithms and Source Code in C", 2nd Edition by Bruce Schneier, John Wiley & Sons, Inc, 1996, ISBN 0-471-11709-9 distinguishes in Chapter 2, Section 2.6 - 2.7, the term encryption as being just a part of cryptography which includes digital signatures and encryption.

### Summary of the invention

Therefore, the object of the present invention is to improve the process of seeding cryptographic random number generators or generating random numbers.

This object is achieved according to the invention by the independent method claims 1 and 2 and by the independent apparatus claims 11 and 12. Preferred embodiments are described in the dependent claims.

The invention is described below, with reference to detailed illustrative embodiments. It will be apparent that the invention can be embodied in a wide variety of forms, some of which may be quite different from the disclosed embodiments. Consequently, the specific structural and functional details disclosed herein are merely representative and do not limit the scope of the invention.

According to one embodiment of the invention, at least a part of an image is inputted but it is also possible to use multiple images. Then pixels of this image are selected, each of which is provided with associated position and color information. Based on the position and the color information associated with the selected pixels, a predetermined number of bits are computed. Those bits are then used for seeding the cryptographic random number generator.

Preferably, the user is able to chose and/or input the image himself. This gives him the unique advantage to change the source for seeding the cryptographic random number generator at any time and to even feed it with any image he wants to take giving the user a much better control of the process.

In one embodiment of the invention, a scanner may be included to scan in printed images supplied by the user of the apparatus. This is simply one of the mechanisms by which the user of the apparatus supplies an initializing image input to the random number seed generator. This mechanism allows for flexibility when designing and building the apparatus dependent on the targeted usability, size and cost.

In one embodiment of the invention, a camera may be included to take pictures when and where the user of the apparatus chooses. This is simply one of the mechanisms by which the user of the apparatus supplies an initializing image input to the random number seed generator.

This mechanism allows for flexibility when designing and building the apparatus dependent on the targeted usability, size and cost.

In one embodiment of the invention, a repository of images (added and removed by the user) is maintained within the confines of the apparatus. This is simply one of the mechanisms by which the user of the apparatus supplies an initializing image input to the random number seed generator. This mechanism allows for flexibility when designing and building the apparatus dependent on the targeted usability, size and cost.

In one embodiment of the invention, linear feedback shift registers (LFSRs) are used to support the generation of the seed. The size of LFSRs used would depend on the size of the seed required, so it is possible to use a configuration of n-bit LFSRs (where n is the number of register elements in the LFSR). The LFSR configuration may be an internal XOR (Type 1) or external XOR LFSR (Type 2) or a combination of both types.

In one embodiment of the invention, multiple input shift registers (MISRs) are used to support the generation of the seed. The size of MISRs used would depend on the size of the seed required, so it is possible to use a configuration of n-bit MISRs (where n is the number of register elements in the MISR).

The color and position of components of the image supplied via the scanner, the camera or by selection from the image repository are used as inputs into the LFSRs or MISRs. It is possible to use each and every one of the pixel components of the image as inputs into the LFSRs or MISRs, while this may be useful and desirable in some instances, it would usually be slow without a proportionate gain in entropy.

An optimization is to use just a set of random pixel components of the image, which are randomly selected as a function of various criteria such as clock timing, previous pixel color and position, current line number containing the pixel, or even some system specific pseudo-random variable source. This delivers an even more secure seed generation.

Furthermore, it is advantageous to calculate a figure of merit reflecting the suitability of the inputted image based on its size, color density and/or color variance; then comparing the calculated figure of merit to a predetermined threshold value which can e.g. be chosen based on a desired security level. If the result of the comparison is that the image is not suitable, the image is rejecteding and/or a warning is outputted. If the result of the comparison is that the image is suitable, the image is accepted. Also in the latter case, an information can be given to the user. This feature enables the user to be sure that the image he inputted will deliver a sufficiently secure key. Nevertheless, the user is still in full control of the process.

Another optimization is the pixel size alignment with the number of register elements in the MISR or LFSR, i.e. 256 bit pixel downsized to 32 bit pixel for input to a 32-bit MISR. It is also possible to pass the inputs (or even the outputs) of the LFSR or MISR through a functional circuit if there is a need or requirement for further processing.

The n-bit outputs from the LFSR or MISR are accumulated in m-bit memory buffers, where m is the size of the cryptographic seed required and is a multiple of the n-bit output from the LFSR or MISR. Various ways of accumulation in the memory buffers are feasible. It is possible to have a round robin assignment of the above outputs into subsequent m-bit memory buffers, using an XOR function or even simple arithmetic accumulation while discarding the overflowing most significant bit values.

Most cryptographic random number generators take a fixed size seed, so the degree of entropy in that seed impacts the security level of the protected data directly or indirectly. This invention allows a variable sized seed to be used depending on the security level and requirements of the application domain. It also allows for regeneration of a new cryptographic seed if and when needed by the user of the apparatus.

It is also possible to use the entropy directly, instead of seeding a cryptographic random number generator. For some cryptographic keys (with the exception of asymmetric keys which are dependent on further tests and processing), it is possible to generate the keys directly from the entropy source, i.e. the resultant m bits cryptographic seed is used directly as a cryptographic key without seeding a cryptographic random number generator.

### Brief Description of Drawings

- Fig. 1: is a schematic diagram of a prior art Internal n-Stage Linear Feedback Shift Register (also referred to as Type 1 LFSR).
- Fig. 2: is a schematic diagram of another prior art External n-Stage Linear Feed-back Shift Register (also referred to as Type 2 LFSR).
- Fig. 3: is a schematic diagram of an embodiment of a prior art Multiple Input Shift Register (MISR).
- Fig. 4: is a high level diagram of a cryptographic random number seed generation system in accordance with one embodiment of the present invention.
- Fig. 5: is a block flow diagram of an image processing unit of the present invention.

### Detailed description of a preferred embodiment

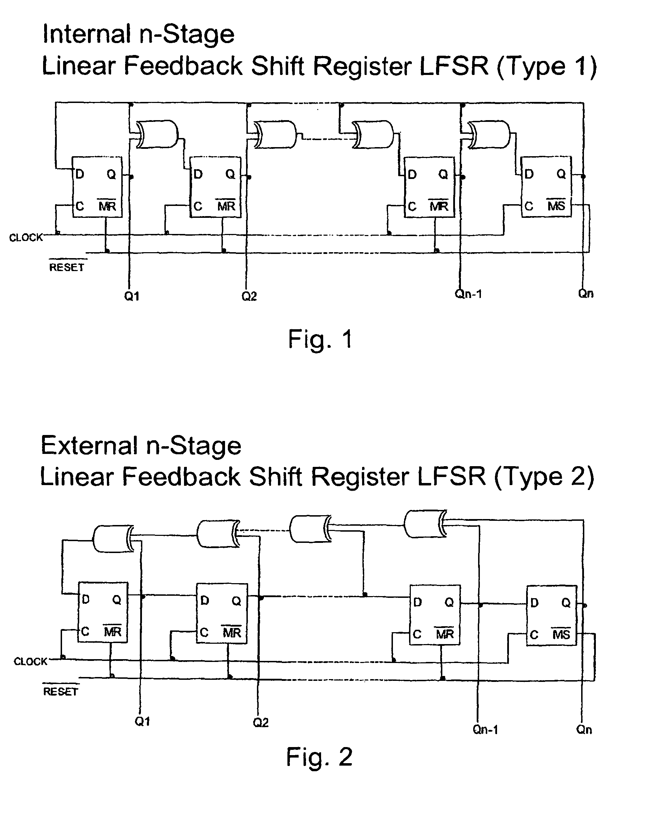

With reference to the drawings, one embodiment of the present invention will now be described. Figure 1 is a schematic diagram showing an internal n-stage linear feedback shift register (LFSR Type 1) used in one embodiment of the present invention. The LFSR in Fig. 1 comprises of a chain of flip-flops with outputs combined in an exclusive-OR (XOR) configuration to form a feedback mechanism. The output of each flip-flop advances through the registers from one bit to the next significant bit. The outputs of two or more of the flip-flops together are combined by performing XOR and fed into the input of subsequent flip-flops. The RESET bit is another input to each of the flip-flops and is used to reset or set the state of the flip-flop. The outputs of the chain of N flip-flops are combined to form an n-bit output (Q1 to Qn) of the LFSR.

Figure 2 is a schematic diagram showing an external n-stage linear feedback shift register (LFSR Type 2) which is used as described above in another embodiment of the present invention.

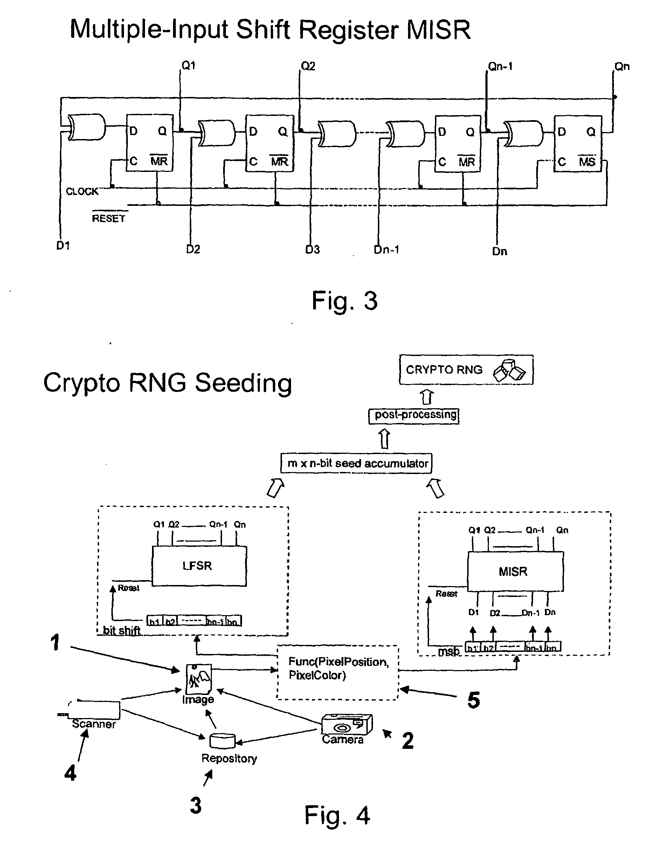

Figure 3 is a schematic diagram showing an n-bit Multiple Input Shift Register (MISR) according to yet another embodiment of the present invention. The MISR in Fig. 3 comprises a chain of flip-flops whose outputs are combined with input data bits (D1 to Dn) in an exclusive-OR (XOR) configuration to be used as input to the next flip-flop in the chain. The output of the final flip-flop is also fed back to the first flip-flop in the chain. The RESET bit is another input to each of the flip-flops and is used to reset or set the state of the flip-flop. The outputs of the chain ofN flip-flops in the MISR are combined to form an n-bit output (Q1 to Qn) of the MISR.

In the block diagram of Fig. 4, the camera 2 or the scanner 4 are used to provide an image 1 or images selected by the user of the apparatus to be used directly in the generation of the seed for the cryptographic random number. The camera 2 or the scanner 4 may also be used to provide images 1 to be stored in a repository 3 from which a user of the apparatus may make one or more selections to be used in the generation of the seed for the cryptographic random number.

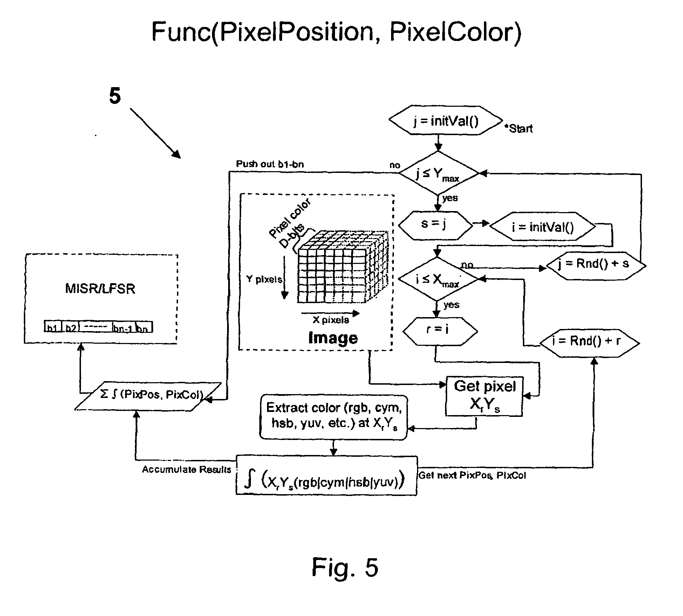

In the block flow diagram of Fig. 5, an instance is shown of how the user selected image 1 or images are fed through a functional circuit which selects some or all of the pixels. The selection unit 5 extracts certain random pixels using their position value (X, Y axis based on the image size) and their color values (dependent on the type of color space and bit depth) to be processed to generate and accumulate as buffered data of n-bits.

The selected pixels would have position (x, y) and color (which could be greyscale, rgb, cym, hsb, yuv, or any combination of possible color spaces, along with the corresponding bit-depth for further precision) values used to compute a result with N-bits (b1 to bn). The N-bit result can be computed over and over again as many times as needed from selected pixels of the user selected image 1 or images. The quality of the user selected image 1 or images can be further enhanced by accepting only those images 1 with the size, color density and color variance that pass some threshold values. These properties can be evaluated either separately or together at once. In the latter case, one value is computed on the basis of the values representing the different properties. In the same manner, it can also be decided whether or not to issue a warning.

Furthermore, it is possible to keep track of the images already used to generate the cryptographic random number seed, and so prevent image re-selection at a subsequent time, by keeping a hash (generated with a one-way hash function) of each image which can then be used to reject the image and/or output a warning.

Fig. 4 shows two different alternatives of using shift registers. In Fig. 4, taking the option illustrated on the left side, the resultant N-bits (b1 to bn) produced from the previous step are used by bit-shifting each bit per clock cycle as input to the RESET bit of the LFSR in Fig. 1 or Fig. 2. While the block diagram shows bit-shifting of the most significant bit (msb), it is also quite possible to bit-shift the least significant bit (lsb) as input to the RESET bit of the LFSR. It is also possible to use any one of the bits as input to the RESET bit of the LFSR. Subsequent resultant N-bits from the previous step are used as further inputs to the RESET bit of the LFSR. Each clock cycle of the LFSR produces N output bits (Q1 to Qn) to be accumulated as an m x n-bit seed for the cryptographic random number generator (where m is any multiple, m being an integer, used to determine the needed number of seed bits).

Another embodiment of the invention is shown as a block diagram in Fig. 4 on the right side, where the resultant N-bits (b1 to bn) produced by the functional circuit described above are used as inputs to an n-bit MISR, while any one of the bits (even though the diagram labels the most significant bit) is used as input to the RESET bit of the MISR at each clock cycle. All the N-bits (b1 to bn) are used in parallel as inputs (D1 to Dn) to the MISR. Each clock cycle of the MISR produces N output bits (Q1 to Qn) to be accumulated as an m x n-bit seed for the cryptographic random number generator (where m is any multiple used to determine the needed number of seed bits).

The present invention is not limited to the above embodiments, as various changes and modifications can be made within the scope of the invention as set forth in appended claims. Therefore, it is intended that such changes and modifications are also encompassed within the technical scope of the present invention.

## Claims

1. Method for seeding a cryptographic random number generator by means of an apparatus, wherein said method comprises the step of:
inputting at least part of an image (1); **characterised in that** the method further comprises the steps of :
selecting pixels of said image (1), each of which is provided with associated position and color information, wherein a sub set of pixels of the image (1) is randomly selected by selecting the next pixel based on the color and/or position of the currently selected pixel; and
computing a predetermined number of bits using the position and the color information associated with the selected pixels;
outputting the computed number of bits for seeding the cryptographic random number generator.

2. Method for generating a cryptographic random number by means of an apparatus, wherein said method comprises the step of:
inputting at least part of an image (1); **characterised in that** the method further comprises the steps of :
selecting pixels of said image (1), each of which is provided with associated position and color information, wherein a sub set of pixels of the image (1) is randomly selected by selecting the next pixel based on the color and/or position of the currently selected pixel; and
computing a predetermined number of bits using the position and the color information associated with the selected pixels;
outputting the computed number of bits as a cryptographic random number.

3. Method according to claim 1 or 2, wherein the step of inputting at least part of the image (1) is performed by a user having chosen the image (1).

4. Method according to one of the claims 1 to 3, wherein the step of inputting includes inputting a plurality of images (1) to be used in the subsequent steps.

5. Method according to one of the claims 1 to 4, wherein the step of inputting employs using a camera (2) and/or a scanner (4) and/or a repository (3), wherein at least one image (1) is stored in the repository (3).

6. Method according to one of the claims 1 to 5, wherein the step of inputting the image (1) further comprises:
calculating a figure of merit reflecting the suitability of the inputted image based on its size, color density and/or color variance; and
comparing the calculated figure of merit to a predetermined threshold value; and
rejecting or outputting a warning if the result of the comparison is that the image (1) is not suitable; and
accepting the image (1) if the result of the comparison is that the image (1) is suitable.

7. Method according to claim 6, wherein re-selection of images is prevented by rejecting and/or outputting a warning for already used images.

8. Method according to one of the claims 1 to 7, wherein the step of computing the predetermined number of bits uses a linear feedback shift register or a multiple input shift register.

9. Method according to one of the claims 1 to 8, wherein the step of selecting pixels of said image (1) further includes aligning a pixel size with a number of register elements.

10. Method according to one of the claims 1 to 9, wherein the step of computing the predetermined number of bits includes buffering of bits so that the predetermined number of outputted bits can be varied.

11. Apparatus for seeding a cryptographic random number generator comprising:
input means adapted for inputting at least part of an image (1); and
selection means (5) adapted for selecting pixels of said image (1), each of which is provided with associated position and color information, **characterised in that** the selection means (5) are further adapted for randomly selecting a sub set of pixels of the image (1) by selecting the next pixel based on the color and/or position of the currently selected pixel; and **that** the apparatus further comprises :
computing means adapted for computing a predetermined number of bits using the position and the color information associated with the selected pixels; and
outputting means adapted for outputting the computed number of bits for seeding the cryptographic random number generator.

12. Apparatus for generating a cryptographic random number comprising:
input means adapted for inputting at least part of an image (1); and
selection means (5) adapted for selecting pixels of said image (1), each of which is provided with associated position and color information, **characterised in that** the selection means (5) are further adapted for randomly selecting a sub set of pixels of the image (1) by selecting the next pixel based on the color and/or position of the currently selected pixel; and **that** the apparatus further comprises:
computing means adapted for computing a predetermined number of bits using the position and the color information associated with the selected pixels;
outputting means adapted for outputting the computed number of bits as a cryptographic random number.

13. Apparatus according to claim 11 or 12, wherein the input means is adapted so that a user can chose the image (1).

14. Apparatus according to one of the claims 11 to 13, wherein the input means is adapted so that a plurality of images (1) to be used in the subsequent steps can be inputted.

15. Apparatus according to one of the claims 11 to 14, wherein the input means is a camera (2) and/or a scanner (4) and/or a repository (3), wherein at least one image (1) is stored in the repository (3).

16. Apparatus according to one of the claims 11 to 15, wherein the input means further comprises:
calculation means adapted for calculating a figure of merit reflecting the suitability of the inputted image based on its size, color density and/or color variance; and
comparison means adapted for comparing the calculated figure of merit to a predetermined threshold value; and
signaling means adapted for rejecting or outputting a warning if the result of the comparison is that the image (1) is not suitable; and wherein the apparatus is adapted to accept the image (1) if the result of the comparison is that the image (1) is suitable.

17. Apparatus according to claim 16, wherein the comparison means and signaling means are further adapted to prevent image re-selection at a subsequent time.

18. Apparatus according to one of the claims 11 to 17, wherein the computing means comprise a linear feedback shift register or a multiple input shift register.

19. Apparatus according to one of the claims 11 to 18, wherein the selection means is further adapted for aligning a pixel size with a number of register elements.

20. Apparatus according to one of the claims 11 to 19, wherein the computing means comprise storage means adapted for buffering of bits so that the predetermined number of outputted bits can be varied.

## Patentansprüche

1. Verfahren zum Initialisieren eines kryptographischen Zufallszahlengenerators mittels einer Vorrichtung, wobei das Verfahren den Schritt umfasst:
Einspeisen zumindest eines Teils eines Bildes (1),
**dadurch gekennzeichnet, dass** das Verfahren weiterhin die Schritte umfasst:
Auswählen von Pixeln des Bildes (1), wobei jeder mit einer zugehörigen Positions- und Farbinformation versehen ist, wobei eine Untermenge von Pixeln des Bildes (1) zufällig ausgewählt wird durch Auswählen des nächsten Pixels basierend auf der Farbe und/oder Position des gegenwärtig ausgewählten Pixels; und
Berechnen einer vorbestimmten Anzahl von Bits unter Verwendung der Position- und der Farbinformation, die zu dem ausgewählten Pixel gehört;
Ausgeben der berechneten Anzahl von Bits zum Initialisieren des kryptographischen Zufallszahlengenerators.

2. Verfahren zum Erzeugen einer kryptographischen Zufallszahl mittels einer Vorrichtung, wobei das Verfahren den Schritt umfasst:
Einspeisen zumindest eines Teils eines Bildes (1),
**dadurch gekennzeichnet, dass** das Verfahren weiterhin die Schritte umfasst:
Auswählen von Pixeln des Bildes (1), wobei jeder mit einer zugehörigen Positions- und Farbinformation versehen ist, wobei eine Untermenge von Pixeln des Bildes (1) zufällig ausgewählt wird durch Auswählen des nächsten Pixels basierend auf der Farbe und/oder Position des gegenwärtig ausgewählten Pixels; und
Berechnen einer vorbestimmten Anzahl von Bits unter Verwendung der Position- und der Farbinformation, die zu dem ausgewählten Pixel gehört;
Ausgeben der berechneten Anzahl von Bits als eine kryptographische Zufallszahl.

3. Verfahren nach Anspruch 1 oder 2, wobei der Schritt des Einspeisens zumindest des Teils eines Bildes (1) durch einen Benutzer ausgeführt wird, der das Bild (1) ausgewählt hat.

4. Verfahren nach einem der Ansprüche 1 bis 3, wobei der Schritt des Einspeisens Einspeisen einer Mehrzahl von Bildern (1), die in den nachfolgenden Schritten zu verwenden sind, einschließt.

5. Verfahren nach einem der Ansprüche 1 bis 4, wobei der Schritt des Einspeisens die Benutzung einer Kamera (2) und/oder eines Scanners (4) und/oder eines Speichers (3), wobei zumindest ein Bild (1) in dem Speicher (3) gespeichert ist, verwendet.

6. Verfahren nach einem der Ansprüche 1 bis 5, wobei der Schritt des Einspeisens des Bildes (1) weiterhin umfasst:
Berechnen eines Gütefaktors, der widerspiegelt wie geeignet das eingespeiste Bild ist basierend auf seiner Größe, Farbdichte und/oder Farbstreuung; und
Vergleichen des berechneten Gütefaktors mit einem vorbestimmten Schwellwert; und
Zurückweisen oder Ausgeben einer Warnung, wenn das Ergebnis des Vergleichs ist, dass das Bild (1) nicht geeignet ist; und
Akzeptieren des Bildes (1), wenn das Ergebnis des Vergleichs ist, dass das Bild (1) geeignet ist.

7. Verfahren nach Anspruch 6, wobei erneute Auswahl von Bildern verhindert wird durch Zurückweisen und/oder Ausgeben einer Warnung für bereits benutzte Bilder.

8. Verfahren nach einem der Ansprüche 1 bis 7, wobei der Schritt des Berechnens der vorbestimmten Anzahl von Bits ein lineares Rückkoppelschieberegister oder ein Mehrfacheingabeschieberegister verwendet.

9. Verfahren nach einem der Ansprüche 1 bis 8, wobei der Schritt des Auswählens von Pixeln des Bildes (1) weiterhin Abgleichen einer Pixelgröße mit einer Anzahl von Registerelementen einschließt.

10. Verfahren nach einem der Ansprüche 1 bis 9, wobei der Schritt des Berechnens der vorbestimmten Anzahl von Bits Zwischenspeichern von Bits einschließt, so dass die vorbestimmte Anzahl von ausgegebenen Bits variiert werden kann.

11. Vorrichtung zum Initialisieren eines kryptographischen Zufallszahlengenerators, die umfasst:
Einspeisungsmittel, die angepasst sind zum Einspeisen zumindest eines Teils eines Bildes (1); und
Auswahlmittel (5), die angepasst sind zum Auswählen von Pixeln des Bildes (1), wobei jeder mit einer zugehörigen Positions- und Farbinformation versehen ist,
**dadurch gekennzeichnet, dass** die Auswahlmittel (5) weiterhin angepasst sind zum zufälligen Auswählen einer Untermenge von Pixeln des Bildes (1) durch Auswählen des nächsten Pixels basierend auf der Farbe und/oder Position des gegenwärtig ausgewählten Pixels; und dass die Vorrichtung weiterhin umfasst:
Berechnungsmittel, die angepasst sind zum Berechnen einer vorbestimmten Anzahl von Bits unter Verwendung der Position- und der Farbinformation, die zu dem ausgewählten Pixel gehört; und
Ausgabemittel, die angepasst sind zum Ausgeben der berechneten Anzahl von Bits zum Initialisieren des kryptographischen Zufallszahlengenerators.

12. Vorrichtung zum Erzeugen einer kryptographischen Zufallszahl, die umfasst:
Einspeisungsmittel, die angepasst sind zum Einspeisen zumindest eines Teils eines Bildes (1); und
Auswahlmittel (5), die angepasst sind zum Auswählen von Pixeln des Bildes (1), wobei jeder mit einer zugehörigen Positions- und Farbinformation versehen ist,
**dadurch gekennzeichnet, dass** die Auswahlmittel (5) weiterhin angepasst sind zum zufälligen Auswählen einer Untermenge von Pixeln des Bildes (1) durch Auswählen des nächsten Pixels basierend auf der Farbe und/oder Position des gegenwärtig ausgewählten Pixels; und dass die Vorrichtung weiterhin umfasst:
Berechnungsmittel, die angepasst sind zum Berechnen einer vorbestimmten Anzahl von Bits unter Verwendung der Position- und der Farbinformation, die zu dem ausgewählten Pixel gehört;
Ausgabemittel, die angepasst sind zum Ausgeben der berechneten Anzahl von Bits als eine kryptographische Zufallszahl.

13. Vorrichtung nach Anspruch 11 oder 12, wobei die Einspeisungsmittel derart angepasst sind, dass einen Benutzer das Bild (1) auswählen kann.

14. Vorrichtung nach einem der Ansprüche 11 bis 13, wobei die Einspeisungsmittel derart angepasst sind, dass eine Mehrzahl von Bildern (1) eingespeist werden kann, die in den nachfolgenden Schritten zu verwenden sind.

15. Vorrichtung nach einem der Ansprüche 11 bis 14, wobei das Eingabemittel eine Kamera (2) und/oder ein Scanner (4) und/oder ein Speicher (3), wobei zumindest ein Bild (1) in dem Speicher (3) gespeichert ist, ist.

16. Vorrichtung nach einem der Ansprüche 11 bis 15, wobei das Eingabemittel weiterhin umfasst:
Berechnungsmittel, die angepasst sind zum Berechnen eines Gütefaktors, der widerspiegelt wie geeignet das eingespeiste Bild ist basierend auf seiner Größe, Farbdichte und/oder Farbstreuung; und
Vergleichsmittel, die angepasst sind zum Vergleichen des berechneten Gütefaktors mit einem vorbestimmten Schwellwert; und
Signalisierungsmittel, die angepasst sind zum Zurückweisen oder Ausgeben einer Warnung, wenn das Ergebnis des Vergleichs ist, dass das Bild (1) nicht geeignet ist; und wobei
Die Vorrichtung angepasst ist zum Akzeptieren des Bildes (1), wenn das Ergebnis des Vergleichs ist, dass das Bild (1) geeignet ist.

17. Vorrichtung nach Anspruch 16, wobei die Vergleichsmittel und die Signalisierungsmittel weiterhin angepasst sind, erneute Auswahl eines Bildes zu einer nachfolgenden Zeit zu verhindern.

18. Vorrichtung nach einem der Ansprüche 11 bis 17, wobei die Berechnungsmittel ein lineares Rückkoppelschieberegister oder ein Mehrfacheingabeschieberegister umfassen.

19. Vorrichtung nach einem der Ansprüche 11 bis 18, wobei die Auswahlmittel weiterhin angepasst sind zum Abgleichen einer Pixelgröße mit einer Anzahl von Registerelementen.

20. Vorrichtung nach einem der Ansprüche 11 bis 19, wobei die Berechnungsmittel Speichermittel umfassen, die angepasst sind zum Zwischenspeichern von Bits, so dass die vorbestimmte Anzahl von ausgegebenen Bits variiert werden kann.

## Revendications

1. Procédé pour produire des valeurs initiales pour un générateur de nombre aléatoire cryptographique au moyen d'un appareil, dans lequel ledit procédé comprend l'étape de :
introduction d'au moins une partie d'une image (1) ;
**caractérisé en ce que** le procédé comprend en outre les étapes de :
sélection de pixels de ladite image (1), chaque pixel étant pourvu d'informations associées à sa couleur et à sa position, où un sous-ensemble de pixels de l'image (1) est sélectionné aléatoirement en sélectionnant le pixel suivant sur la base de la couleur et/ou position du pixel sélectionné actuellement ; et
calcul d'un nombre prédéterminé de bits utilisant la position et les informations de couleur associées aux pixels sélectionnés ;
fourniture du nombre calculé de bits pour initier le générateur de nombre aléatoire cryptographique.

2. Procédé pour générer un nombre aléatoire cryptographique au moyen d'un appareil, dans lequel ledit procédé comprend les étapes de :
introduction d'au moins une partie d'une image (1) ; et **caractérisé en ce que** le procédé comprend en outre les étapes de :
sélection des pixels de ladite image (1), chaque pixel étant pourvu d'informations associées à sa couleur et à sa position, où un sous-ensemble de pixels de l'image (1) est sélectionné aléatoirement en sélectionnant le pixel suivant sur la base de la couleur et/ou de la position du pixel sélectionné actuellement ; et
calcul d'un nombre prédéterminé de bits en utilisant la position et les informations de couleur associées aux pixels sélectionnés ;
fourniture du nombre calculé de bits comme un nombre aléatoire cryptographique.

3. Procédé selon la revendication 1 ou 2, dans laquelle l'étape d'introduction d'au moins une partie de l'image (1) est réalisée par un utilisateur ayant choisi l'image (1).

4. Procédé selon l'une des revendications 1 à 3, dans lequel l'étape d'introduction comprend l'introduction d'une pluralité d'images (1) à utiliser dans les étapes qui suivent.

5. Procédé selon l'une des revendications 1 à 4, dans lequel l'étape d'introduction emploie l'utilisation d'une caméra (2) et/ou d'un scanner (4) et/ou d'un dépôt (3), dans lequel au moins une image (1) est stockée dans le dépôt (3).

6. Procédé selon l'une des revendications 1 à 5, dans lequel l'étape d'introduction de l'image (1) comprend en outre :
le calcul d'une figure de mérite reflétant l'aptitude de l'image introduite sur la base de sa taille, de sa densité de couleur et/ou de sa variance de couleur ; et
comparaison de la figure de mérite calculée à une valeur de seuil prédéterminée ; et
élimination ou fourniture d'un avertissement si le résultat de la comparaison est que l'image (1) n'est pas appropriée ; et
acceptation de l'image (1) si le résultat de la comparaison est que l'image (1) est appropriée.

7. Procédé selon la revendication 6, dans lequel une resélection des images est empêchée en éliminant et/ou fournissant un avertissement pour des images déjà utilisées.

8. Procédé selon l'une des revendications 1 à 7, dans lequel l'étape de calcul du nombre prédéterminé de bits utilise un registre à décalage à contre-réaction linéaire ou un registre à décalage à entrée multiple.

9. Procédé selon l'une des revendications 1 à 8, dans lequel l'étape de sélection des pixels de ladite image (1) comprend en outre l'alignement d'une taille de pixel avec un nombre d'éléments de registre.

10. Procédé selon l'une des revendications 1 à 9, dans lequel l'étape de calcul du nombre prédéterminé de bits comprend la mise en tampon des bits pour que le nombre prédéterminé de bits fournis puisse être varié.

11. Appareil pour produire des valeurs initiales pour un générateur de nombre aléatoire cryptographique comprenant :
des moyens d'entrée adaptés pour introduire au moins une partie d'une image (1) ; et
des moyens de sélection (5) adaptés pour sélectionner des pixels de ladite image (1), chaque pixel étant pourvu d'informations associées à sa couleur et à sa position, **caractérisé en ce que** les moyens de sélection (5) sont en outre adaptés pour sélectionner aléatoirement un sous-ensemble de pixels de l'image (1) en sélectionnant le pixel suivant sur la base de la couleur et/ou de la position du pixel sélectionné actuellement ; et que l'appareil comprend en outre :
des moyens de calcul adaptés pour calculer un nombre prédéterminé de bits en utilisant la position et les informations de couleur associées aux pixels sélectionnés ; et
des moyens de fourniture adaptés pour fournir le nombre calculé de bits pour ensemencer le générateur de nombre aléatoire cryptographique.

12. Appareil pour générer un nombre aléatoire cryptographique comprenant :
des moyens d'entrée adaptés pour introduire au moins une partie d'une image (1) ; et
des moyens de sélection (5) adaptés pour sélectionner des pixels de ladite image (1), chaque pixel étant pourvu d'informations associées à sa couleur et à sa position, **caractérisé en ce que** les moyens de sélection (5) sont en outre adaptés pour sélectionner aléatoirement un sous-ensemble de pixels de l'image (1) en sélectionnant le pixel suivant sur la base de la couleur et/ou de la position du pixel sélectionné actuellement ; et que l'appareil comprend en outre :
des moyens de calcul adaptés pour calculer le nombre prédéterminé de bits en utilisant la position et les informations de couleur associées aux pixels sélectionnés ;
des moyens de fourniture adaptés pour fournir le nombre calculé de bits comme un nombre aléatoire cryptographique.

13. Appareil selon la revendication 11 ou 12, dans lequel les moyens d'entrée est adapté pour qu'un utilisateur puisse choisir l'image (1).

14. Appareil selon l'une des revendications 11 à 13, dans lequel le moyen d'entrée est adapté pour qu'une pluralité d'images (1) à utiliser dans les étapes qui suivent puissent être introduites.

15. Appareil selon l'une des revendications 11 à 14, dans lequel le moyen d'entrée est une caméra (2) et/ou un scanner (4) et/ou un dépôt (3), dans lequel au moins une image (1) est stockée dans le dépôt (3).

16. Appareil selon l'une des revendications 11 à 15, dans lequel le moyen d'entrée comprend en outre :
des moyens de calcul adaptés pour calculer une figure de mérite réfléchissant la capacité de l'image introduite sur la base de sa taille, de sa densité de couleur et/ou de sa variance de couleur ; et
des moyens de comparaison adaptés pour comparer la figure de mérite calculée à une valeur de seuil prédéterminée ; et
des moyens de signalisation adaptés pour éliminer ou fournir un avertissement si le résultat de la comparaison est que l'image (1) n'est pas appropriée, et dans lequel l'appareil est adapté pour accepter l'image (1) si le résultat de la comparaison est que l'image (1) est appropriée.

17. Appareil selon la revendication 16, dans lequel les moyens de comparaison et les moyens de signalisation sont en outre adaptés pour empêcher une resélection d'image à un instant qui suit.

18. Appareil selon l'une des revendications 11 à 17, dans lequel le moyens de calcul comprennent un registre à décalage à contre-réaction linéaire ou un registre à décalage à entrée multiple.

19. Appareil selon l'une des revendications 11 à 18, dans lequel les moyens de sélection sont en outre adaptés pour aligner une taille de pixel avec un nombre d'éléments de registre.

20. Appareil selon l'une des revendications 11 à 19, dans lequel les moyens de calcul comprennent des moyens de stockage adaptés pour mettre en tampon des bits pour que le nombre prédéterminé de bits fournis puisse être varié.
